**Europäisches Patentamt**

**European Patent Office**

**Office européen des brevets**

(11) Publication number : **0 338 617 B1**

# EUROPEAN PATENT SPECIFICATION

(45) Date of publication of patent specification :
**16.12.92 Bulletin 92/51**

(51) Int. Cl.⁵ : **B05C 9/08,** B05C 9/04,
B05C 5/00, B29C 63/24,
B05D 1/30

(21) Application number : **89200924.2**

(22) Date of filing : **12.04.89**

(54) **Process and device for coating an edge border of a substrate with an extrudable plastic material.**

(30) Priority : **15.04.88 NL 8800984**

(43) Date of publication of application :
**25.10.89 Bulletin 89/43**

(45) Publication of the grant of the patent :
**16.12.92 Bulletin 92/51**

(84) Designated Contracting States :
**BE DE ES FR GB IT NL SE**

(56) References cited :
**US-A- 2 293 252**
**US-A- 4 785 996**

(73) Proprietor : **NORDSON NEDERLAND B.V.**
**40, Peppelkade**
**NL-3992 AK Houten (NL)**

(72) Inventor : **Buser, Bastiaan**
**14, Stootvalk**
**NL-3435 ZJ Nieuwegein (NL)**

(74) Representative : **Timmers, Cornelis Herman**
**Johannes et al**
**EXTERPATENT B.V. P.O. Box 3241**
**NL-2280 GE Rijswijk (NL)**

# Description

The invention relates to a method as described in the preamble of claim 1 and a device for carrying out this method as described in the preamble of claim 9, both as known from US-A-2 293 252.

This known method and device use a nozzle with an internal channel communicating with a lateral outlet slot in which fits the edge border of the substrate to be coated. The nozzle is fed with the plastic material and is moved relative to, and along the edge border; during this movement the material, flowing out of the slot, adheres to the said border.

At many cases, in particular when large substrates or large numbers of substrates have to be treated this known method and device are not very practical, particularly not because an extruder nozzle must be used of which the dimensions are within close limits adapted to the thickness of the substrate to be treated. Furthermore it is difficult to obtain a coating with equal thickness along its entire length while the process parameters (temperature, speed of movement viscosity) must be closely controlled.

The object of the invention is to provide a method and device of the kind as mentioned above which operates completely contact-free, and with which the coating can be applied quickly and reliably.

This aim is achieved with a method such as described in the characterising part of claim 1 and a device such as described in the characterising part of claim 9.

Preferred embodiments of the method are described in Claims 2 to 8, and preferred embodiments of the device in Claims 10 to 13.

Thus according to the invention the extruder nozzle is positioned some distance away from the substrate, in such a way that the nozzle is at approximately the same height as the cut edge to be coated. When the substrate and the extrusion device are now made to move relative to each other and parallel to said cut edge, and the plastic material is extruded in a thin jet at high speed, while at the same time this jet is given changes of direction by oscillating or rotating, with a component at right angles to said parallel movement (for example, by driving the extrusion devices carrying the nozzle in a swing movement), the scalloping will be produced through the fact that the extruded plastic thread adheres to the substrate at the application side when the jet of extruded material is interrupted by it, while the extruded thread will adhere around the cut edge and to the other side of the substrate when the jet direction of the extruded thread at the level of the extruder nozzle no longer contacts the substrate, this being as a result of the combination of kinetic energy in the extrusion thread and the cohesion properties of the material by which it is, as it were, swung around the edge, since the strand has already adhered to the side of the substrate opposite the extruder nozzle. This phenomenon will be explained in greater detail with reference to the drawing.

The outflow rate of the plastic material out of the nozzle must be high enough to ensure that the adhesive particles have sufficient kinetic energy to guarantee that they make a complete oscillation movement and can thus also come into contact with the face behind. If this requirement is not met, complete scalloping will not occur, but rather a sort of fringe formation.

The oscillation frequency must, of course, be adapted to the speed at which the plastic material leaves the extruder nozzle.

The oscillation amplitude at the level of the substrate crosswise to the cut edge is determined by the thickness of the end face (cut edge) and the desired width of the folded-over edges of the scalloping, and is limited by the cohesion of the plastic material and the outflow rate of the plastic material to be achieved. A great amplitude requires a high outflow rate in order to achieve a complete swing-around effect, and the forces occurring here as a result of the higher kinetic energy must be absorbed by the cohesion of the material. Exceeding the admissible limits would lead to strand breakage.

Apart from the requirement that the material is to be applied must be extruded if necessary at a raised temperature, the material must have sufficient adhesion immediately after extrusion to adhere to the substrate, and must have sufficient internal strength (cohesion) to deform elastically under the influence of forces occurring as a result of, for example, kinetic energy (during which a certain degree of plastic deformation is also permitted), so that the extruded strand or thread will not break under the influence of the above-mentioned forces.

Such properties are found, inter alia, in various types of Hot Melts. Hot Melts are thermoplastic adhesives which are commonly used in the packaging industry and in the light product assembly industry.

The invention is explained with reference to the drawing, in which:

Figure 1 is a schematic illustration which explains the principle of the invention at a number of stages of processing;

Figure 2 is a schematic illustration of the way in which a thread or strip is deposited on a substrate according to the invention;

Figure 3 shows the forces acting on a material particle during the carrying out of the process according to the invention;

Figure 4 is a schematic illustration of the movement of a material thread during the carrying out of the process according to the invention;

Figure 5 shows in perspective the way in which a straight edge of a substrate is coated;

Figure 6 is a top view of the pattern according to which a rectangular edge boundary of a substrate is coated;

Figure 7 is a schematic illustration of the pattern according to which a circular edge boundary of a substrate is coated;

Figure 8a is a schematic illustration of the pattern according to which a straight edge boundary is coated with a circular movement;

Figure 8b is a corresponding illustration of a circular edge boundary;

Figure 9 is a schematic illustration of the way in which the circular pattern is produced by pneumatic means;

Figure 10 shows schematically a first practical embodiment of a device in which the principle of the invention is used;

Figure 11 shows a second such embodiment; and

Figure 12 shows a third such embodiment.

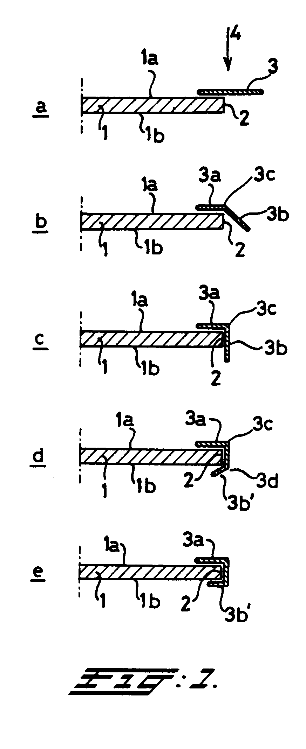

In figures 1a - 1e reference numeral 1 indicates a substrate with an end edge 2. Reference numeral 3 indicates a thread of plastically deformable material which has sufficient adhesion relative to the substrate 1 to ensure that when it is deposited in the direction of the arrow 4 on the substrate 1 it adheres to said substrate and also has sufficient cohesion to prevent the thread from disintegrating during the movements which will be described below.

When the thread 3 is deposited in the direction of the arrow 4 on the substrate 1 (Figure 1a) the part 3a of the thread will thus adhere to the top surface 1a of the substrate 1. The remaining part 3b will fold over through the angle 3c under the influence of the kinetic energy present in the thread 3 (see Figure 1b) to the position shown in Figure 1c. At that moment the end edge 2 of the substrate is covered by the thread part 3b. If the thread has sufficient kinetic energy, the part 3b will also fold over at the point 3d, thereby causing the still remaining part 3b′ to bend until it is under the substrate 1. This part 3b′ will finally come to rest against the bottom side 1b of the substrate 1, and will adhere thereto through the adhesion properties of the thread material. The situation shown in Figure 1e is then obtained, in which a narrow part of the end edge 2 of the substrate 1 is covered with the material of the thread 3.

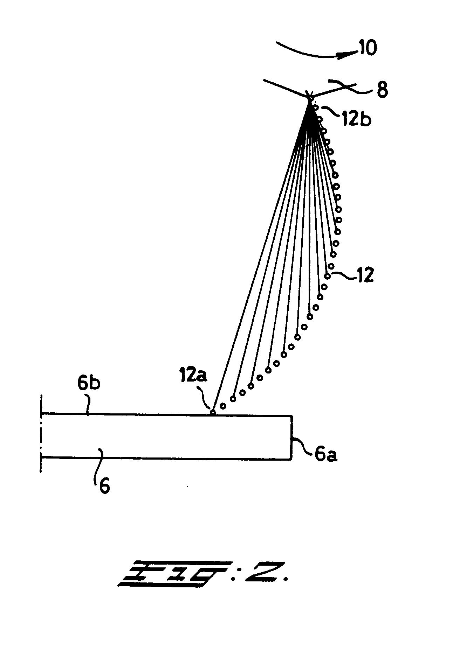

It will be explained with reference to Figures 2 to 5 how a similar effect can be obtained by means of a continuously extruded thread of a material which has the properties which are explained in the introduction and are necessary for carrying out the process of the invention.

Figure 2 shows schematically a substrate 6 with end edge 6a and an extruder nozzle 8 which is disposed approximately above this end edge and at a distance above it, and which is connected in a manner not shown to a suitable source (not shown either) of material used for the coating. The nozzle is driven in a swinging movement in the direction of the arrow 10, and at the same time a thread is extruded from said nozzle, being shown as a series of cohesive droplets, indicated by reference numeral 12. The figures shows, as it were, a "snapshot" at the moment at which the end of the thread, indicated by 12a, comes into contact with the surface 6b of the substrate, while the material particles 12b closest to the nozzle have just left said nozzle. It will be clear that in this way a cohesive thread of the extruded material is laid over the substrate surface in the manner explained with reference to Figures 1a-1e.

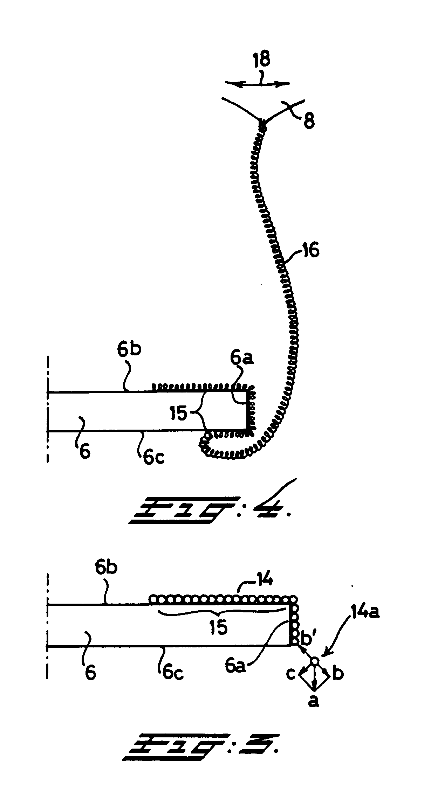

Figure 3 shows how the thread 14 covers the substrate over a zone 15 of the top surface 6b of the substrate adjoining the end edge 6a, and has also covered the end edge 6a; this situation thus corresponds to that shown in Figure 1c. An individual material particle 14 is then acted upon by the force $a$ which is generated as a result of the kinetic energy, and which can be broken down into the components $b$ and $c$. The component is counterbalanced by the force $b′$ occurring as a result of the cohesion of the material, and the force $c$ is directed downwards at an angle and to the left, as shown in Figure 3. It is this force which causes the "folding over" of the thread round the end edge 6a until it is against the bottom surface 6c of the substrate.

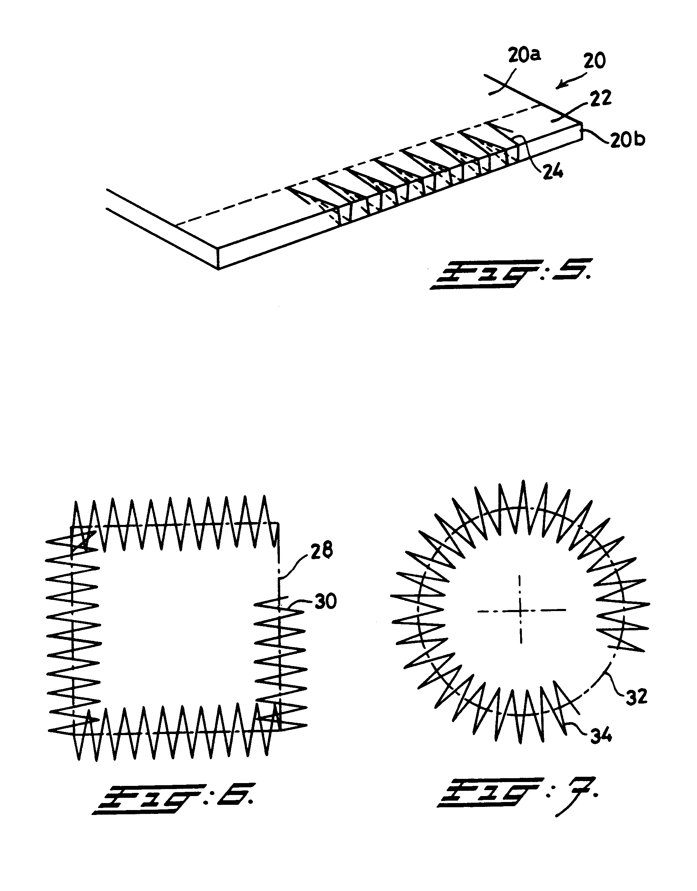

Figure 4 illustrates how a swinging movement of the thread 16 round the end edge 6a of the substrate 6 results from the to and fro swinging movement of the nozzle 8 in the direction of the double arrow 18, resulting in a coating of said end edge 6 and the adjacent edge zones 15a with the material of the thread 16. Of course, the nozzle is moved along the edge of the substrate, i.e. at right angles to the plane of the drawing, during this movement, so that the individual thread parts covering the material come to rest beside each other. The figure shows how the top surface 6b with the end edge 6a are already covered and the thread 16 swings against the bottom edge zone on the bottom surface 6c and adheres thereto; on the return movement the thread will first adhere to said bottom surface slightly displaced relative to the already adhered part, and will then swing back along the front edge 6a and the top surface 6b.

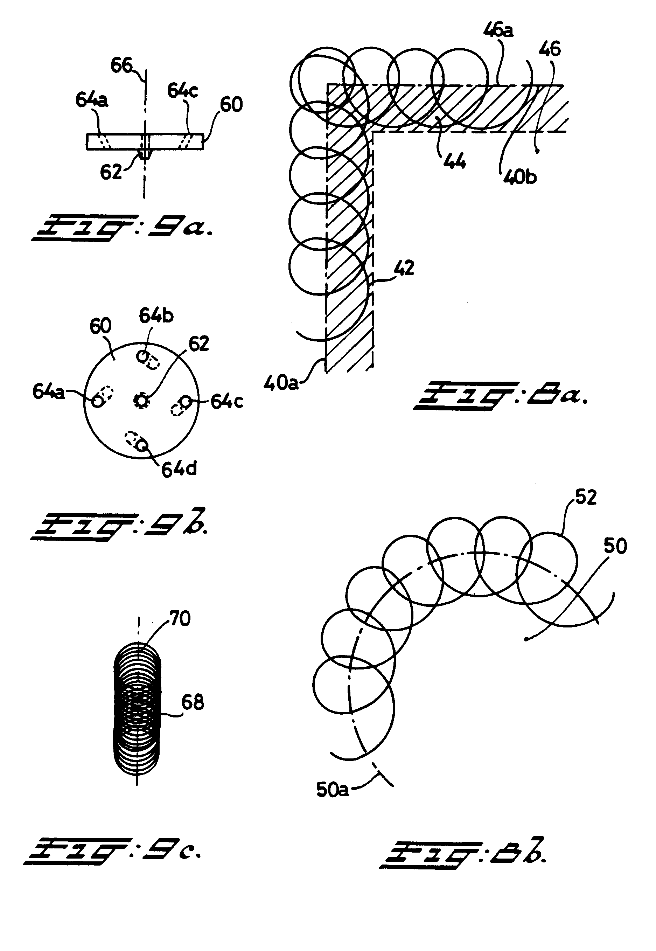

Figure 5 shows in a very simplified way the result obtained with the invention, with the distance between the individual thread or strip parts exaggerated in the drawing for the sake of clarity. The figure shows the substrate 20, of which one narrow edge zone 22 on the top surface 20a, with the front surface 20b and a narrow edge zone on the bottom surface which is not visible, are coated with the material to be applied, said material being applied as a result of an oscillating to and fro movement of the extruder nozzle used (not shown), with a simultaneous movement of said nozzle along the end wall 20b. The material is deposited in the form of a continuous thread 24, and the deposited threads fuse to a continuous layer.

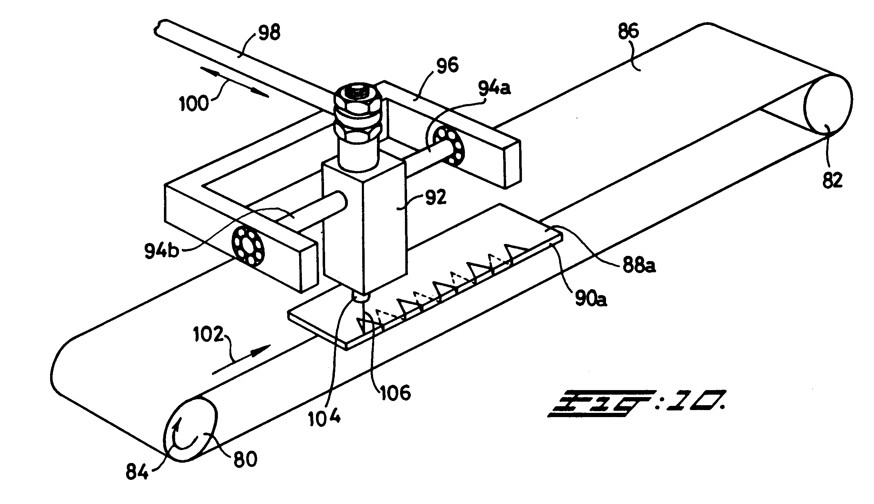

Figure 6 shows how it is possible with the process according to the invention to coat a rectangular edge boundary 28, indicated schematically by dashed and dotted lines, by making an extruder head following the contours of the edge boundary 28 carry out an oscillating movement at right angles thereto along the path 30. It is clear that the boundary 28 can be either an external or an internal boundary (opening) of a substrate.

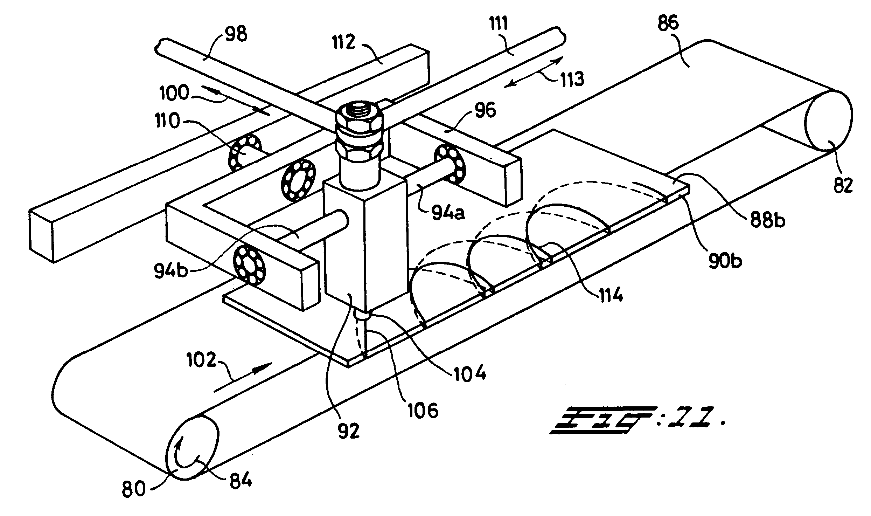

Figure 7 shows the coating of a circular edge boundary 32, using an extruder head which carries out an oscillating to and fro movement at right angles to said edge boundary, as schematically shown by the zigzag line 34.

Advantageous results are also obtained with an extruder head which does not carry out an oscillating to and fro movement, but which carries out a rotary movement while following the edge boundary to be coated, in such a way that the axis of the extruder head, and thus the extruded head, describes a curved surface going out from the extruder head.

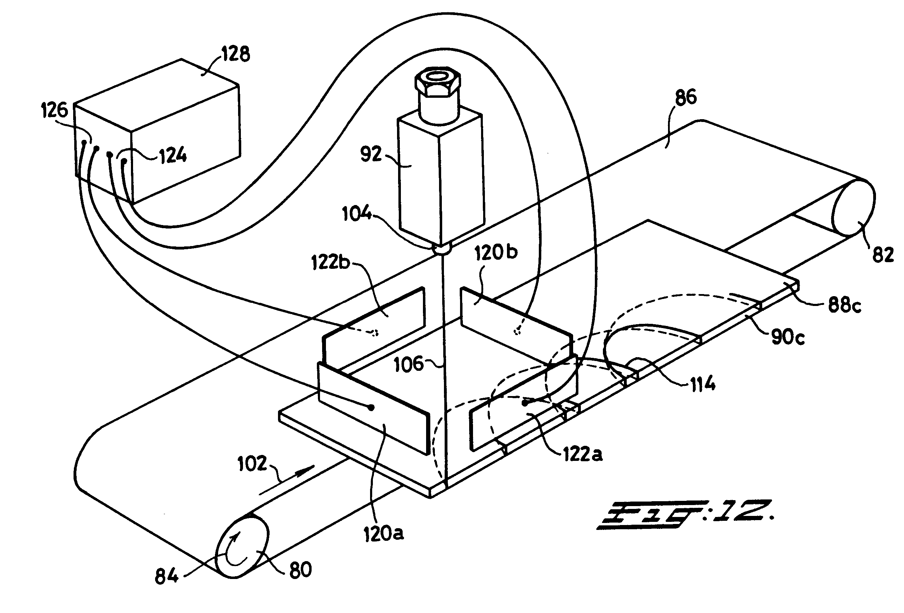

Figure 8a shows the edge boundary of the substrate, consisting of two straight parts 40a, 40b, and the line 42 indicates the line of intersection of the thread with the plane of the drawing. It appears that at the edge boundary the movement of the thread has a component at right angles to said boundary. The result is that not only the end edge 46a of the substrate 46 to be coated, but also the narrow, hatched zones 44 on the top and bottom surface thereof are coated with the material.

Figure 8b illustrates the coating of the circular end edge 50a of a substrate 50 in a corresponding way; the line of intersection of the extruded thread with the plane of the drawing is indicated by the line 52.

This rotary movement of the extruded thread can also be obtained using a specially shaped extruder nozzle which does not carry out a rotary movement, but is only moved relative to the end edge and following it (in which case the substrate is, of course, moved relative to a stationary extruder head). The extruded thread here is set in rotary motion about the axis of the extruder nozzle, for example, by pneumatic or electrostatic influence.

Figures 9a and 9b illustrate schematically a pneumatic influence of the extruded thread, in which use is made of a special nozzle which is commercially available, for example the Nordson nozzle marketed by applicant.

Figure 9a shows schematically a cross section through the end plate 60 of such a nozzle with the central extrusion aperture 62 and the four air outflow apertures 64a-64d which are disposed concentrically around it and slant towards the axis 66, and which are fed with compressed air during use.

Figure 9b shows a bottom view of this end plate. The result is that an extruded jet, which initially leaves the nozzle along the axis 66, is set in rotary motion; the extruded thread will be deposited on a flat face in the pattern indicated by 68 in Figure 9c, in which figure the path of the extrusion aperture 62 is indicated by the line 70. When an extruder nozzle driven in this way is moved along the edge of a substrate, the effect described above will occur, and a narrow edge zone of the top and bottom surface of the substrate together with the end edge thereof will be coated with the extruded material.

Each of Figures 10, 11 and 12 shows schematically a practical embodiment of a device in which the principles of the invention are applied. Corresponding elements are indicated here by the same reference figures.

Each device comprises a conveyor belt 86 which is guided over two rollers 80, 82 (of which the roller 80 is driven in the direction of the arrow 84), and which carries a substrate 88a, 88b, 88c of which the end face 90a, 90b, 90c has to be coated in the manner indicated above. Figure 10 shows the use of an extruder head 92 which is suspended by means of the arms 94a, 94b in a stationary U-shaped bracket 96. By means of the arm 98, which is driven by an actuator (not shown) in a to and fro movement in the direction of the double arrow 100, the extruder head 92 obtains an oscillating movement at right angles to the direction of movement of the substrate 88a, indicated by the arrow 102. The jet 106 of coating material extruded by the nozzle 104 results in a coating pattern of the type shown in Figure 5.

Figure 11 shows an embodiment in which the extruder head 92 is accommodated in the manner described above in the frame 96, and in which this frame 96 can also tilt about the shaft 110 relative to the fixed frame part 112, at right angles to the direction of tilt about the shaft 94a. For this there is an operating arm 111 which is driven by an actuator (not shown) in the direction of the double arrow 113. The result is that the extruded thread 106 describes a pattern 114 on the surface. of the substrate 88b, of the type illustrated with reference to Figure 8a, resulting in a coating of the end edge 90b of the substrate 88b and of the adjoining narrow edge zones.

Finally, Figure 12 shows a fixed extruder head 92 with extruder nozzle 104, in which the thread 106 thereby extruded is deflected electrostatically by means of a first and a second pair of deflection plates: 120a, 120b and 122a, 122b. Each of the pairs of plates is connected to a pair of connections 124, 126 of an alternating voltage generator 128, which supplies voltages shifted in phase through 90° to these connections 124, 126. The result is that the jet 106 will carry out a rotary movement about the axis of the nozzle 104 in the manner known for electrostatic deflection of an electron beam in a cathode ray tube. The pattern 114 finally obtained corresponds to what is obtained in the embodiment according to Figure 11, and is also shown in Figure 8a.

As described above with reference to Figures 9a-9c, such a pattern can also be obtained with pneumatic deflection of the emerging jet. In this case the device according to Figure 12 is used without the deflection plates 120a-120b and 122a-122b, and the extruder head can be, for example, the Nordson model H200-S.

## Claims

1. Method for coating an edge border (6a, 6b, 6c; 22, 44; 90a, 90b, 90c) of a substrate (6, 20, 88a, 88b) with an extrudable plastic material by means of an extruder nozzle (8, 60, 104) situated near said edge border, characterised in that one deposits in an oscillating to and fro movement or in a rotary movement a series of adjoining and cohesive threads or strips (3, 14, 16, 24, 106) of this material which to this end has sufficient adhesion relative to the substrate to ensure adhesion thereto and sufficient cohesion to prevent disintegration of the threads or strips, the length of said threads or strips being greater than the breadth of the zone (6a, 6b, 6c; 22; 44; 90a, 90b, 90c) plus the thickness of the end edge with such an outflow speed from the nozzle (8, 160, 104) that a thread or strip deposited on the one substrate surface spreads under the influence of the kinetic energy present in the extruder material via the edge until it reaches the opposite substrate surface.

2. Method according to Claim 1, characterized in that one uses an extruder nozzle (8, 104) which extrudes the material in a jet (12) and brings about a relative moment which follows both the contour of the edge boundary (6a, 22, 44; 90a) and a component at right angles thereto between nozzle and edge boundary.

3. Method according to Claim 1, characterized in that one drives the extruder nozzle (8, 104) in such a way that the axis thereof carries out an oscillating movement at right angles to the edge boundary (6a, 22, 24, 90a)

4. Method according to Claim 1, characterized in that one drives the extruder nozzle (8, 104) in such a way that the axis thereof describes a curved surface going out from the nozzle.

5. Method according to Claim 2, characterized in that one influences the jet (12) of material emerging from the nozzle in such a way that said jet carries out on oscillating movement at right angles to the edge boundary (6a)

6. Method according to Claim 2, characterized in that one influences the material emerging from the nozzle in such a way that said jet describes a curved surface (42, 52) going out from the nozzle.

7. Method according to Claim 5 or 6, characterized in that one influences the emerging jet pneumatically. (64a...64d)

8. Method according to Claim 5 or 6, characterized in that one influences the emerging jet electrostatically.

9. A device for carrying out the method according to one or more of the claims 1-8, comprising an extruder nozzle (8, 60, 104) to be located near the edge border (6a, 6b, 6c; 22; 24; 90a, 90b, 90c) of said substrate (6, 20, 88a, 88b) and being connected to a source of extrudable plastic material, characterised by means (94a, 94b, 98, 110, 110) for moving the extruder nozzle in such a way that the extruded thread or strip (3, 14, 16, 24, 106) performs an oscillating to and fro movement or a rotary movement, while the plastically deformable material has sufficient adhesion relative to the substrate to ensure adhesion and sufficient cohesion to prevent disintegration of the extruded thread or strip.

10. Device according to Claim 9, characterized by means (94a, 94b, 98) for driving the extruder nozzle (104) in an oscillating movement directed at right angles to the edge boundary.

11. Device according to Claim 9, characterized by means (94a, 94b, 110, 98, 111) for driving the nozzle (104) in such a motion that the axis thereof describes a curved surface centered on the nozzle.

12. Device according to Claim 9, characterized in that the nozzle (60) is of the kind with a central outlet aperture (62) and a number of air outflow apertures (64a...64d) disposed in a circle around it and facing the nozzle.

13. Device according to Claim 9, characterized by electrostatic deflection electrodes (120a, 120b; 122a, 122b) set up around the nozzle (104) and connected to one or more sources of deflection voltages.

## Patentansprüche

1. Verfahren zur Umhüllung eines Kantenbereichs (6a, 6b, 6c; 22, 44; 90a, 90b, 90c) eines Substrats (6, 20, 88a, 88b) mit einem extrudierbaren Kunststoffmaterial mit Hilfe einer Extruderdüse (8, 60, 104), die in der Nähe des Kantenbereichs angeordnet ist,

dadurch gekennzeichnet, daß

in einer oszillierenden Hin- und Herbewegung oder in einer Rotationsbewegung eine Reihe von aneinanderstoßenden und zusammenhaltenden Fäden oder Streifen (3, 14, 16, 24, 106) dieses Materials, das zu diesem Zweck ausreichende Haftkraft in Bezug auf das Substrat aufweist, um die Haftung an dieses zu gewährleisten, und eine ausreichende Bindung aufweist, um eine Trennung der Fäden oder Streifen zu verhindern, wobei die Länge der Fäden oder Streifen größer ist als die Breite der Zone (6a, 6b, 6c; 22; 44; 90a, 90b, 90c) plus der Dicke der Abschlußkante, mit einer derartigen Austrittsgeschwindigkeit aus der Düse (8, 160, 104) aufgebracht werden, daß ein auf die eine Oberfläche des Substrats aufgebrachter Faden oder Streifen unter dem Einfluß der im Extrudermaterial vorhandenen kinetischen Energie durch die Kante hindurchläuft, bis er die gegenüberliegende Oberfläche des Substrats erreicht.

2. Verfahren nach Anspruch 1, dadurch gekennzeichnet, daß eine Extruder-Düse (8, 104) benutzt wird, die das Material in einem Strahl (12) extrudiert und ein Relativmoment zustande bringt, das sowohl der Kontur der Kantenbegrenzung (6a, 22, 44; 90a) als auch einer dazu rechtwinkligen Komponente zwischen Düse und Kantenbegrenzung folgt.

3. Verfahren nach Anspruch 1, dadurch gekennzeichnet, daß die Extruder-Düse (8, 104) in der Weise gefahren wird, daß deren Achse eine oszillierende Bewegung im rechten Winkel zur Kantenbegrenzung (6a, 22, 24, 90a) ausführt.

4. Verfahren nach Anspruch 1, dadurch gekennzeichnet, daß eine Extruderdüse (8, 104) in einer Weise gefahren wird, daß deren Achse eine von der Düse ausgehende gekrümmte Oberfläche beschreibt.

5. Verfahren nach Anspruch 2, dadurch gekennzeichnet, daß der Strahl (12) des aus der Düse austretenden Materials in einer Weise beeinflußt wird, daß der Strahl eine oszillierende Bewegung im rechten Winkel zur Kantenbegrenzung (6a) beschreibt.

6. Verfahren nach Anspruch 2, dadurch gekennzeichnet, daß das aus der Düse austretende Material in einer Weise beeinflußt wird, daß der Strahl eine von der Düse ausgehende gekrümmte Oberfläche (42, 52) beschreibt.

7. Verfahren nach Anspruch 5 oder 6, dadurch gekennzeichnet, daß der austretende Strahl pneumatisch (64a ... 64d) beeinflußt wird.

8. Verfahren nach Anspruch 5 oder 6, dadurch gekennzeichnet, daß der austretende Strahl elektrostatisch beeinflußt wird.

9. Vorrichtung zur Durchführung eines Verfahrens nach einem oder mehreren der Ansprüche 1 bis 8, aufweisend eine Extruderdüse (8, 60, 104), die nahe der Kantenbegrenzung (6a, 6b, 6c; 22; 24; 90a, 90b, 90c) des Substrats (6, 20, 88a, 88b) angeordnet und mit einer Quelle von extrudierbarem Kunststoffmaterial verbunden ist, gekennzeichnet durch eine Einrichtung (94a, 94b, 98, 110, 111) zur Bewegung der Extruderdüse in einer solchen Weise, daß der extrudierte Faden oder Streifen (3, 14, 16, 24, 106) eine oszillierende Hin- und Herbewegung oder eine Rotationsbewegung ausführt, wobei das plastisch verformbare Material eine genügende Haftkraft in bezug auf das Substrat aufweist, um die Haftung zu gewährleisten und eine ausreichende Bindung aufweist, um eine Trennung des extrudieren Fadens oder Streifens zu verhindern.

10. Vorrichtung nach Anspruch 9, gekennzeichnet durch eine Einrichtung (94a, 94b, 98) zum Fahren der Extruderdüse (104) in einer oszillierenden Bewegung, die im rechten Winkel zur Kantenbegrenzung gerichtet ist.

11. Vorrichtung nach Anspruch 9, gekennzeichnet durch eine Einrichtung (94a, 94b, 110, 98, 111) zum Fahren der Düse (104) in einer solchen Bewegung, daß ihre Achse eine gekrümmte Oberfläche beschreibt, die zur Düse zentriert ist.

12. Vorrichtung nach Anspruch 9, dadurch gekennzeichnet, daß die Düse (60) eine zentrale Auslaßöffnung (62) und eine Zahl von Luftausflußöffnungen (64a ... 64d) hat, die in einem Kreis darum angeordnet sind und der Düse gegenüberliegen.

13. Vorrichtung nach Anspruch 9, gekennzeichnet durch elektrostatische Ablenkungs-Elektroden (120a, 120b; 122a, 122b), die rund um die Düse (104) aufgestellt und mit einer oder mehreren Quellen von Ablenkungs-Spannungen verbunden sind.

## Revendications

1. Procédé pour enduire une bordure (6a, 6b, 6c ; 22, 44 ; 90a, 90b, 90c) d'un substrat (6, 20, 88a, 88b) avec une matière plastique extrudable, au moyen d'une buse d'extrusion (8, 60, 104) située près de ladite bordure, caractérisé en ce qu'on dépose en un mouvement oscillant de va-et-vient ou dans un mouvement rotatif une série de fils ou bandes contigüs et cohésifs (3, 14, 16, 24, 106) de ce matériau, ledit matériau ayant dans ce but une adhérence suffisante par rapport au substrat pour assurer l'adhérence sur le substrat et une cohésion suffisante pour éviter la désintégration des fils ou bandes, la longueur desdits fils ou bandes étant supérieure à la largeur de la zone (6a, 6b, 6c ; 22, 44 ; 90a, 90b, 90c) plus l'épaisseur du bord d'extrémité, le dépôt étant effectué avec une vitesse d'éjection hors de la buse (8, 160, 104) telle qu'un fil ou une bande déposé sur la surface du substrat s'étale sous l'influence de l'énergie cinétique présente dans le matériau extrudé, ledit fil ou ladite bande déposé sur ladite surface de substrat s'étalant au-delà du bord jusqu'à ce qu'il atteigne la surface opposée.

2. Procédé selon la revendication 1, caractérisé en ce qu'on utilise une buse d'extrusion (8, 104) qui extruse le matériau dans un jet (12) et provoque un moment relatif qui suit à la fois le contour de la limite du bord (6a, 22, 44 ; 90a) et une composante à angle droit par rapport à ce dernier entre la buse et la limite du bord.

3. Procédé selon la revendication 1, caractérisé en ce qu'on entraîne la buse d'extrusion (8, 104) de façon que son axe suive un mouvement oscillant à angle droit par rapport à la limite du bord (6a, 22, 44 ; 90a).

4. Procédé selon la revendication 1, caractérisé en ce qu'on entraîne la buse d'extrusion (8, 104) de façon que son axe décrive une surface courbe partant de la buse.

5. Procédé selon la revendication 2, caractérisé en ce qu'on influence le jet (12) de matériau sortant de la buse de façon que ledit jet suive un mouvement oscillant à angle droit par rapport à la limite du bord (6a).

6. Procédé selon la revendication 2, caractérisé en ce qu'on influence le matériau sortant de la buse, de façon que ledit jet décrive une surface courbe (42, 52) partant de la buse.

7. Procédé selon la revendication 5 ou la revendication 6, caractérisé en ce qu'on influence pneumatiquement le jet sortant (6a ... 6b).

8. Procédé selon la revendication 5 ou la revendication 6, caractérisé en ce qu'on influence électrostatiquement le jet sortant.

9. Dispositif pour mettre en oeuvre le procédé selon une ou plusieurs des revendications 1 à 8, comprenant une buse d'extrusion (8, 60, 104) devant être disposée près de la bordure (6a, 6b, 6c ; 22, 44, 90a, 90b, 90c) dudit substrat (6, 20, 88a, 88b), et étant connectée à une source de matière plastique extrudable, caractérisé par des moyens (94a, 94b, 98, 110, 111) pour déplacer la buse d'extrusion de façon que le fil ou la bande extrudé (3, 14, 16, 24, 106) suive un mouvement oscillant de va-et-vient ou un mouvement rotatif, tandis que le matériau plastiquement déformable présente une adhérence suffisante par rapport au substrat pour assurer l'adhérence et une cohésion suffisante pour éviter la désintégration, du fil ou de la bande extrudé.

10. Dispositif selon la revendication 9, caractérisé par des moyens (94a, 94b, 98) pour entraîner la buse d'extrusion (104) dans un mouvement oscillant dirigé à angle droit par rapport à la limite du bord.

11. Dispositif selon la revendication 9, caractérisé par des moyens (94a, 94b, 110, 98, 111) pour entraîner la buse (104) dans un mouvement tel que son axe décrive une surface courbe centrée sur la buse.

12. Dispositif selon la revendication 9, caractérisé en ce que la buse (60) est du type ayant une ouverture centrale de sortie (62) et un certain nombre d'ouvertures d'air (64a ... 64d) disposées en cercle autour de la buse et faisant face à la buse.

13. Dispositif selon la revendication 9, caractérisé par des électrodes de déflection électrostatique (120a, 120b : 122a, 122b), disposées autour de la buse (104) et connectées à une ou plusieurs sources de tension déflectrice.

FIG. 1.

*Fig: 2.*

Fig. 4.

Fig. 5.

FIG:5.

FIG:6.

FIG:7.

66

64a          64c          60

62

_FIG:9a._

64b
60          62
64a          64c
64d

_FIG:9b._

70

68

_FIG:9c._

46a          46
44          40b

42

40a

_FIG:8a._

52          50

50a

_FIG:8b._

Fig.10.

FIG.11.

Fig.12.